# EUROPÄISCHE PATENTSCHRIFT

(11) **EP 3 140 146 B1**
(45) Veröffentlichungstag und Bekanntmachung des Hinweises auf die Patenterteilung: **19.06.2019**
(21) Anmeldenummer: 15719974.6
(22) Anmeldetag: 10.04.2015
(51) Int. Cl.: B60K 35/00, B60R 11/02, B60R 11/00, G02B 7/182, G02B 27/01

(54) **ANZEIGEVORRICHTUNG FÜR EIN KRAFTFAHRZEUG, KRAFTFAHRZEUG UND VERFAHREN ZUM BETREIBEN EINER ANZEIGEVORRICHTUNG**
DISPLAY DEVICE FOR A MOTOR VEHICLE, MOTOR VEHICLE AND METHOD FOR OPERATING A DISPLAY DEVICE
DISPOSITIF D'AFFICHAGE DESTINÉ À UN VÉHICULE AUTOMOBILE, VÉHICULE AUTOMOBILE ET PROCÉDÉ POUR FAIRE FONCTIONNER UN DISPOSITIF D'AFFICHAGE

(30) Priorität: 08.05.2014 DE 102014106498
(43) Veröffentlichungstag der Anmeldung: 15.03.2017
(73) Patentinhaber: Valeo Comfort and Driving Assistance, 94046 Créteil Cedex (FR)
(72) Erfinder: SCHOCH, Lars, 74321 Bietigheim-Bissingen (DE); KUNTZE, Daniel, 74321 Bietigheim-Bissingen (DE); SIMONIS, Karl, 74321 Bietigheim-Bissingen (DE)
(74) Vertreter: Delplanque, Arnaud
(86) Internationale Anmeldenummer: PCT/EP2015/057850
(87) Internationale Veröffentlichungsnummer: WO 2015/169538

(56) Entgegenhaltungen:
- WO-A1-2012/169557
- JP-A- 2006 069 473
- US-A1- 2002 166 273
- US-B1- 6 837 581

## Beschreibung

Die Erfindung betrifft eine Anzeigevorrichtung für ein Kraftfahrzeug, mit einem zwischen einer Verstaustellung und einer Gebrauchsstellung beweglich angeordneten Spiegel, einem ersten beweglich angeordneten Abdeckelement, welches zum Bewegen zwischen einer Verstaustellung und einer Gebrauchsstellung mit einem elektromechanischen Antrieb gekoppelt ist, und einem zweiten beweglich angeordneten Abdeckelement, wobei die Anzeigevorrichtung eine Verstaustellung, in der der Spiegel und die beiden Abdeckelemente in einer jeweiligen zugehörigen Verstaustellung angeordnet sind, und eine Gebrauchsstellung, in der der Spiegel und die beiden Abdeckelemente in einer jeweiligen zugehörigen Gebrauchsstellung angeordnet sind, aufweist, und in der Verstaustellung die beiden Abdeckelemente den Spiegel zumindest teilweise abdecken. Sie betrifft ebenfalls ein Kraftfahrzeug mit solch einer Anzeigevorrichtung und ein Verfahren zum Betreiben einer solchen Anzeigevorrichtung.

Bekannte Anzeigevorrichtungen in Kraftfahrzeugen nutzen Spiegel um eine Information in eine spezifische Richtung projizierend anzuzeigen. Hierbei handelt es sich zumeist um sogenannte Combinerspiegel oder Kombinierspiegel, welche eine semitransparente Spiegelfläche aufweisen, durch welche ein Überlagern einer auf den Spiegel projizierten Information, welche von diesem reflektiert wird, mit einer durch den Spiegel hindurch scheinenden Information aus einer hinter dem Spiegel gelegenen Umgebung ermöglicht. Wird die Anzeigevorrichtung nicht benötigt, wird zum Schutz des Spiegels dieser beispielsweise in ein Spiegelfach eingezogen oder eingeklappt.

Die US 2002/0166273 A1 zeigt beispielsweise eine gattungsgemäße Anzeigevorrichtung mit einer mechanischen Verstaumöglichkeit für einen Combiner-Spiegel, die zwei Abdeckelemente aufweist. Die zwei Abdeckelemente sind drehbar gelagert und der derart miteinander gekoppelt, dass das erste Abdeckelement beim Öffnen der Combiner-Abdeckungen vom zweiten Abdeckelement mit bewegt wird. Beim weiteren Verfahren in die Endstellung ist das zweite Abdeckelement vom ersten entkoppelt.

Die US 6837581 B1 beschreibt eine Anzeigevorrichtung, welche zwei aufklappbare Spiegel aufweist. Beide Spiegel sind mit einer Aufklappmechanik verbunden, so dass beide Spiegel bei einer entsprechenden Betätigung gleichzeitig in die Gebrauchsstellung verbracht werden.

In der WO 2012/169557 A1 ist ebenfalls eine gattungsgemäße Anzeigevorrichtung offenbart. Die Anzeigevorrichtung weist zwei drehbar gelagerte Abdeckelemente auf, die mittels einer Zahnradkinematik in eine Verstau- und in eine Gebrauchsstellung verbracht werden können.

Die JP 2006069473 beschreibt eine gattungsgemäße Anzeigevorrichtung, welche zwei Abdeckelemente aufweist, welche in der Gebrauchsstellung jeweils verschwenkt werden, so dass der Combiner-Spiegel ausgefahren werden kann. Darüber hinaus wird auch noch eine Staubschutzabdeckung aus dem Gehäuse heraus verfahren.

So stellt beispielsweise die US 2012/0176683 A1 ein Positionierungssystem für einen Kombinierspiegel vor, mittels welchem der Kombinierspiegel in eine Gebrauchsstellung gebracht werden kann und dort ein Nachjustieren einer Winkelposition des Kombinierspiegels durchgeführt wird. Auch die DE 40 11 495 C1 beschreibt eine Anzeigevorrichtung, bei welcher ein Spiegel unterschiedlich positioniert werden kann. In einer Verstaustellung wird der Spiegel dort eingeklappt und durch einen Deckel geschützt.

Bekannte Ausführungen weisen viele Bauteile und mehrere Motoren zum Antrieb der Abdeckungen für den Spiegel auf Es ist eine Aufgabe der vorliegenden Erfindung, eine Anzeigevorrichtung für ein Kraftfahrzeug, ein Kraftfahrzeug mit einer solchen Anzeigevorrichtung sowie ein Verfahren zum Betreiben einer solchen Anzeigevorrichtung bereitzustellen, welche bzw. welches einen zum Bewegen der Komponenten antriebstechnisch vereinfachten Aufbau aufweist.

Diese Aufgabe wird erfindungsgemäß durch eine Anzeigevorrichtung, ein Kraftfahrzeug und ein Verfahren gemäß den unabhängigen Patentansprüchen gelöst.
Eine erfindungsgemäße Anzeigevorrichtung für ein Kraftfahrzeug umfasst einen zwischen einer Verstaustellung und einer Gebrauchsstellung beweglich angeordneten Spiegel, über ein erstes beweglich angeordnetes Abdeckelement, welches zum Bewegen zwischen einer Verstaustellung und einer Gebrauchsstellung mit einem elektromechanischen Antrieb gekoppelt ist, und über ein zweites beweglich angeordnetes Abdeckelement. Die Anzeigevorrichtung weist eine Verstaustellung, in der der Spiegel und die beiden Abdeckelemente in einer jeweiligen zugehörigen Verstaustellung angeordnet sind, und eine Gebrauchsstellung, in der der Spiegel und die beiden Abdeckelemente in einer jeweiligen zugehörigen Gebrauchsstellung angeordnet sind, auf. In der Verstaustellung decken die beiden Abdeckelemente den Spiegel zumindest teilweise ab. Es handelt sich bei der Verstaustellung also um eine geschlossene Stellung, in der keine optische Anzeige über den Spiegel möglich ist. Bei der Gebrauchsstellung handelt es sich um eine geöffnete Stellung, bei der eine optische Anzeige am Spiegel möglich ist und der Spiegel insbesondere ausgeklappt oder ausgefahren ist. Die jeweiligen Verstaustellungen und Gebrauchsstellungen von Spiegel und den beiden Abdeckelementen sind hier Endpositionen auf einem Weg, den die jeweiligen Bauteile zwischen der Verstau- und Gebrauchsstellung der Anzeigvorrichtung zurücklegen. Wesentlich für die erfindungsgemäße Anzeigevorrichtung ist, dass das zweite Abdeckelement zumindest in der Verstaustellung durch ein Federelement vorgespannt ist, um den von der Anzeigevorrichtung benötigten Bauraum zu minimieren. Das hat den Vorteil, dass ein zusätzlicher Antrieb oder eine zusätzliche Kinematik, welche mit dem bestehenden Antrieb gekoppelt ist, für das zweite Abdeckelement nicht erforderlich ist und somit eingespart werden kann. Es wird also Bauraum für zusätzliche Kinematikkomponenten eingespart und die Bewegung der Komponenten antriebstechnisch vereinfacht. Überdies wird über das Federelement ein selbsttätiges Öffnen möglich, also ein selbstständiges Bewegen des zweiten Abdeckelements aus der Verstaustellung in die Gebrauchsstellung ohne einen eigenen Antrieb. Auch ist das zweite Abdeckelement so durch die Vorspannung spielfrei in dieser Endposition ausgeführt.

Bei dem Spiegel kann es sich insbesondere um einen Kombinierspiegel handeln, also einen Spiegel mit einer semitransparenten Spiegelfläche, welche nicht nur Licht reflektiert, sondern auch Licht transmittiert, so dass reflektiertes und transmittiertes Licht überlagert wird.

In einer bevorzugten Ausführungsform ist vorgesehen, dass in der Verstaustellung des zweiten Abdeckelements das zweite Abdeckelement mit dem ersten Abdeckelement mechanisch gekoppelt ist und durch das erste Abdeckelement, insbesondere in der Verstaustellung des ersten Abdeckelements, gehalten ist. Dies hat den Vorteil, dass kein gesonderter Verriegelungsmechanismus zusätzlich erforderlich ist, und somit über eine vereinfachte Mechanik Verschleiß, Bauteilanzahl und Platzbedarf verringert ist. Der Federkraft des Federelements ist somit durch diese Kopplung der Abdeckelemente entgegengewirkt, so dass sich das zweite Abdeckelement nicht unerwünscht aufgrund der Vorspannung aus der Verstaustellung bewegen kann.

In der erfindungsgemäßen Ausführungsform ist vorgesehen, dass das erste Abdeckelement ausgehend von der Gebrauchsstellung auf einem ersten Teilweg des ersten Abdeckelements von dem zweiten Abdeckelement mechanisch entkoppelt ist. Der erste Teilweg ist hier ein Teil von einem Weg, den das erste Abdeckelement von der Gebrauchsstellung aus in die Verstaustellung zurücklegt, welcher sich insbesondere unmittelbar an die die Gebrauchsstellung definierende Endposition des ersten Abdeckelements anschließt bzw. mit dieser beginnt. Das hat den Vorteil, dass das erste und das zweite Abdeckelement ab dem entkoppelten Zustand unabhängig voneinander die jeweilige Gebrauchsstellung erreichen können, so dass insbesondere eine asymmetrische Bauweise mit beispielsweise unterschiedlich großen Abdeckelementen trotz des antriebstechnisch vereinfachten Aufbaus leicht realisiert werden kann. Diese Unabhängigkeit gibt auch eine zusätzliche Freiheit in der konkreten Ausgestaltung der Anzeigevorrichtung, welche für eine Bauraumeinsparung genutzt werden kann.

In der erfindungsgemäßen Ausführungsform ist vorgesehen, dass das erste Abdeckelement ausgehend von der Gebrauchsstellung auf einen zweiten Teilweg des ersten Abdeckelements bis zum Erreichen der Verstaustellung des ersten Abdeckelements mit dem zweiten Abdeckelement mechanisch gekoppelt ist. Die mechanische Kopplung auf dem zweiten Teilweg bringt hier den wesentlichen Vorteil, dass das zweite Abdeckelement durch das erste Abdeckelement entgegen der Federspannung bewegt werden kann. Somit kann das zweite Abdeckelement vollkommen ohne eigenen Antrieb über das Federelement und das erste Abdeckelement zwischen Gebrauchs- und Verstaustellung hin- und herbewegt werden. Weitere, verschleißträchtige und Bauraum einnehmende Bauteile sind also nicht erforderlich.

Der Weg, den das erste Abdeckelement von der Gebrauchsstellung aus bis zur Verstaustellung zurücklegt, lässt sich also in einen ersten Teilweg, welcher sich an die der Gebrauchsstellung entsprechenden Endposition des Weges anschließt und einen zweiten Teilweg, welcher sich an die Endposition, welche der Verstaustellung entspricht, anschließt, unterteilen. Insbesondere bilden die beiden Teilwege also überlappungsfrei den gesamten Weg des ersten Abdeckelements von der Gebrauchsstellung in die Verstaustellung. Insbesondere ist bei dem Erreichen der Verstaustellung des ersten Abdeckelements dann auch das zweite Abdeckelement in der zugehörigen Verstaustellung.

Insbesondere kann die mechanische Kopplung derart ausgebildet sein, dass durch ein, insbesondere lineares, Verschieben des ersten Abdeckelements das zweite Abdeckelement mitbewegt ist. Dies bringt den Vorteil eines besonders einfachen Aufbaus, bei dem keine weitere Kinematik, insbesondere keine weitere Übersetzung zwischen das erste und das zweite Abdeckelement geschaltet werden muss.

Gemäß der erfindungsgemäßen Ausführungsform ist vorgesehen, dass das erste Abdeckelement zumindest ein, insbesondere zapfenförmiges, Koppelelement aufweist, welches auf dem zweiten Teilweg in eine Führungskulisse des zweiten Abdeckelements eingreift und so die mechanische Kopplung umgesetzt ist. Das hat den Vorteil, dass eine direkte Kopplung zwischen den beiden Abdeckelementen vorliegt, wodurch ein besonders einfacher Aufbau mit wenigen Bauteilen möglich ist. Zudem kann über die konkrete Ausformung der Führungskulisse Ausmaß und Wirkung der mechanischen Führung einfach an die gegebenen Bedürfnisse angepasst werden.

In einer bevorzugten Ausführungsform ist vorgesehen, dass das zweite Abdeckelement eine Rotationsachse aufweist und jeweils durch eine Rotation um diese Rotationsachse in die zugehörige Verstau- und Gebrauchsstellung schwenkbar ist. Das hat den Vorteil, dass ein Schwenkmechanismus besonders platzsparend ausgeführt werden kann. Gerade falls die erste Abdeckung über eine Translationsbewegung zwischen Verstau- und Gebrauchsstellung hin- und herbewegt wird, kann diese besonders einfach und direkt mit der Rotationsbewegung mechanisch gekoppelt werden.

In einer weiteren Ausführungsform ist vorgesehen, dass das zweite Abdeckelement U-förmig mit zwei Seitenwangen, also in Form einer Brücke, bei welcher die Seitenwangen den Brückenpfeilern entsprechen, ausgeführt ist, und eine, insbesondere trichterförmige, Führungskulisse, an einer, insbesondere innenliegenden, Seitenfläche zumindest einer Seitenwange angeordnet ist. Gegebenenfalls kann hier auch auf eine Seitenwange verzichtet werden und das zweite Abdeckelement entsprechend L-förmig mit einer Seitenwange ausgeführt sein. Das hat den Vorteil, dass das Abdeckelement durch die Seitenwangen stabilisiert wird und somit eine besonders stabile Führung und Bewegung des Abdeckelements möglich ist. Über die innenseitige Anordnung der Führungskulisse wird eine optimale Raumnutzung ermöglicht, da so die Seitenwangen sehr nah an einem Außengehäuse der Anzeigevorrichtung angeordnet sein können. Auch kann die Führung und Bewegung des Abdeckelements einfach, stabil und zuverlässig durch ein zumindest zeitweise zwischen den Seitenwangen angeordnetes Bauteil, insbesondere das erste Abdeckelement, erfolgen.

In einer anderen Ausführungsform ist vorgesehen, dass das erste und/oder das zweite Abdeckelement an einer in der Verstaustellung und/oder in der Gebrauchsstellung dem Spiegel zugewandten Innenseite eine lichtabsorbierende Oberfläche aufweist. Das hat den Vorteil, dass so in der Gebrauchsstellung störende Reflexionen unterbunden werden und somit eine insgesamt kompaktere Konstruktion möglich ist.

In einer bevorzugten Ausführungsform ist vorgesehen, dass der Spiegel mit dem Antrieb des ersten Abdeckelements mechanisch gekoppelt und durch diesen verschwenkbar ist. Das hat den Vorteil, dass lediglich ein Antrieb für die zwei unterschiedlichen Bauteile erforderlich ist, was Raum und Kosten spart.

Dabei kann insbesondere vorgesehen sein, dass der Spiegel einen Trägerbügel aufweist, der zumindest mit einer mit einem Zahnrad einer Mechanik des Antriebs integrierten, insbesondere seitlich integrierten, Führungskulisse mechanisch gekoppelt ist. Das hat den Vorteil, dass über die spezifische Ausformung des Trägerbügels und der Führungskulisse die Bewegung des Spiegels und des ersten Abdeckelements optimal auf einander abgestimmt werden können, so dass beide Bauteile trotz der relativ zueinander folgenden Bewegung nah beisammen angeordnet sein können ohne bei dem Bewegen zwischen Verstaustellung und Gebrauchsstellung aneinander zu stoßen. Der Trägerbügel umfasst vorzugsweise einen Grundträger bzw. Mittelbereich, an welchem an gegenüberliegenden Enden vorzugsweise U-förmige oder V-förmige Trägerarme angeordnet sind.

In einer bevorzugten Ausführungsform ist vorgesehen, dass das erste Abdeckelement eine integrierte, insbesondere geradlinige, Zahnstruktur aufweist, welche ein Zahnrad des Antriebs kämmt, insbesondere direkt kämmt. Das hat den Vorteil, dass das erste Abdeckelement auf platzsparende, einfache und robuste Weise bewegt bzw. verschoben wird. Durch die Integration bzw. einstückige Ausbildung des Abdeckelements und der Zahnstruktur kann Montageaufwand reduziert werden und unerwünschte Relativbewegungen zwischen der Zahnstruktur und dem Abdeckelement vermieden werden.

In einer vorteilhaften Ausführungsform ist die Anzeigevorrichtung als Kopf-oben-Anzeigevorrichtung (head-up display) ausgeführt. Bei dem Spiegel handelt es sich dann insbesondere um den Kombinierspiegel einer solchen Anzeigevorrichtung.

Die Erfindung umfasst auch ein Kraftfahrzeug mit einer Anzeigevorrichtung gemäß einer der beschriebenen Ausführungsformen oder einer Kombination hiervon.

Ebenfalls Teil der Erfindung ist ein Verfahren zum Betreiben einer Anzeigevorrichtung für ein Kraftfahrzeug, bei dem ein beweglich angeordneter Spiegel, ein erstes beweglich angeordnetes Abdeckelement, welches zum Bewegen zwischen einer Verstaustellung und einer Gebrauchsstellung mit einem elektromechanischen Antrieb gekoppelt ist, und ein zweites beweglich angeordnetes Abdeckelement zwischen einer Verstaustellung der Anzeigevorrichtung und einer Gebrauchsstellung der Anzeigevorrichtung bewegt werden. In der Verstaustellung sind der Spiegel und die beiden Abdeckelemente in einer jeweiligen zugehörigen Verstaustellung angeordnet und in der Gebrauchsstellung sind der Spiegel und die beiden Abdeckelemente in einer jeweiligen zugehörigen Gebrauchsstellung angeordnet. Dabei decken in der Verstaustellung die beiden Abdeckelemente den Spiegel zumindest teilsweise ab. Um die Anzeigevorrichtung in einem möglichst geringen Bauraumvolumen zu betreiben, wird das zweite Abdeckelement zumindest in der Verstaustellung durch ein Federelement vorgespannt.

Es hält hier also insbesondere in der Verstaustellung der Anzeigevorrichtung das erste Abdeckelement, insbesondere in seiner zugeordneten Verstaustellung, gegen eine Kraft des Federelements das zweite Abdeckelement in dessen zugehöriger Verstaustellung. Bewegt sich nun das erste Abdeckelement entlang eines Weges aus der Verstaustellung in die Gebrauchsstellung, so entkoppelt sich insbesondere das erste Abdeckelement vom zweiten Abdeckelement. Durch das Federelement getrieben, bewegt sich dann das zweite Abdeckelement, insbesondere durch eine Rotation um eine Rotationsachse, insbesondere in die zugehörige Gebrauchsstellung. Das erste Abdeckelement wird über den Antrieb, insbesondere über ein mit einer in das erste Abdeckelement integrierten Zahnung kämmendes Zahnrad des Antriebs, in seine zugehörige Gebrauchsstellung gebracht. Insbesondere über den gleichen Antrieb, über insbesondere das gleiche Zahnrad, wird dann auch der Spiegel aus seiner Verstaustellung in die Gebrauchsstellung bewegt, so dass schließlich die gesamte Anzeigevorrichtung in die Gebrauchsstellung bewegt wurde. Das Bewegen des ersten Abdeckelements und des Spiegels kann hier teilweise zeitgleich erfolgen.

Aus der Gebrauchsstellung der Anzeigevorrichtung erfolgt ein Überführen in die Verstaustellung insbesondere über ein Bewegen des Spiegels in die Verstaustellung über den Antrieb. Dabei bewegt sich insbesondere auch das erste Abdeckelement in Richtung seiner Verstaustellung. Insbesondere kann hier in einem zweiten Wegabschnitt bzw. zweiten Teilweg des Gesamtweges von der Gebrauchsstellung in die Verstaustellung, wobei am Ende des zweiten Wegabschnitts das erste Abdeckelement in seiner Verstaustellung angelangt ist, ein mechanisches Koppeln zwischen dem ersten Abdeckelement und dem zweiten Abdeckelement erfolgen. Hier kann insbesondere ein Koppelelement des ersten Abdeckelements in eine Führungskulisse, welche insbesondere in einer Seitenwange des zweiten Abdeckelements, welches in diesem Fall U-förmig ausgeführt ist, eingreifen und somit das zweite Abdeckelement entgegen der Spannung des Federelementes in die Verstaustellung bewegen.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind.

Ausführungsbeispiele der Erfindung werden nachfolgend anhand schematischer Zeichnungen näher erläutert.

Es zeigen:
- Fig. 1: eine schematische Schnittdarstellung eines Kraftfahrzeugs mit einer eingebauten beispielhaften Ausführungsform einer erfindungsgemäßen Anzeigevorrichtung;
- Fig. 2: eine schematische Darstellung einer Anzeigevorrichtung gemäß einem Ausführungsbeispiel der Erfindung in einer Verstaustellung;
- Fig. 3: das in Fig. 2 dargestellte Ausführungsbeispiel ohne Gehäuseabdeckung; und
- Fig. 4: das in Fig. 3 dargestellte Ausführungsbeispiel in einer Gebrauchsstellung.

In den Figuren werden gleiche oder funktionsgleiche Elemente mit den gleichen Bezugszeichen versehen.

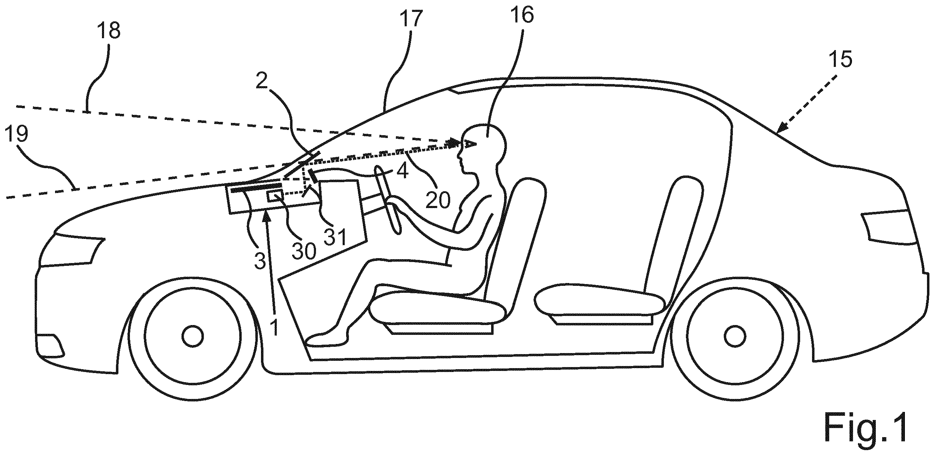

Fig. 1 zeigt eine schematische Schnittdarstellung eines Kraftfahrzeugs mit einer eingebauten beispielhaften Ausführungsform einer erfindungsgemäßen Anzeigevorrichtung1, welche hier als Kopf-oben-Anzeigevorrichtung ausgebildet und angeordnet ist. Eine Anzeigevorrichtung 1 ist hier beispielhaft in ein Armaturenbrett eines Kraftfahrzeugs 15 in einer Fahrtrichtung vor einem Fahrer 16 angeordnet. Der Fahrer 16 nimmt durch eine Windschutzscheibe 17 fallendes Licht aus einer Umgebung des Kraftfahrzeugs 15 wahr. Auf einem ersten Lichtweg 18 gelangt Licht aus der Umgebung direkt in das Auge des Fahrers 16. Licht, welches über einen zweiten Lichtweg 19 zum Auge des Fahrers 16 gelangt, durchdringt erst die Windschutzscheibe 17 und dann einen Spiegel 2 der Anzeigevorrichtung 1. Licht, welches auf dem zweiten Lichtweg 19 zu dem Fahrer 16 gelangt, wird jedoch zusätzlich mit einem Licht überlagert, welches auf einem teilweise mit dem zweiten identischen dritten, Lichtweg 20 zu dem Fahrer 16 gelangt. Auf dem dritten Lichtweg 20 gelangt ein Licht zu dem Fahrer 16, welches von einer Lichtsignalquelle 30 der Anzeigevorrichtung 1 ausgestrahlt und zum Anzeigen einer Information auf den Spiegel 2 der Anzeigevorrichtung 1 projiziert wird. Im gezeigten Beispiel ist zum Verlängern des optischen Weges bei geringem Bauraumverbrauch ein weiterer, gewöhnlicher Spiegel 31 in den dritten Lichtweg 20 eingebracht. Da im gezeigten Beispiel das Licht des zweiten Lichtweges 19 den Spiegel 2 genau an einer gleichen Stelle unter einem gleichen Winkel durchdringt, wie das Licht des dritten Lichtweges 20 an dem Spiegel 2 auftrifft und reflektiert wird, gelangt das Licht des zweiten Lichtweges 19 und das Licht des dritten Lichtweges 20 überlagert zu dem Fahrer 16. Dieser erhält somit gleichzeitig eine Information aus der Umgebung, welche auf dem zweiten Lichtweg 19 zu ihm gelangt ist, und eine Information aus der Anzeigevorrichtung 1, welche auf dem dritten Lichtweg 20 zu ihm gelangt ist. Er muss also seinen Blick nicht von der Windschutzscheibe 17 abwenden, um eine Information der Anzeigevorrichtung 1 wahrnehmen zu können und umgekehrt.

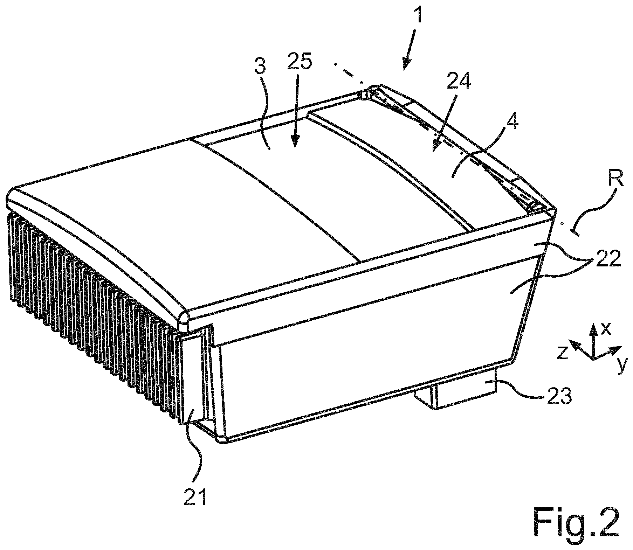

In Fig. 2 ist eine schematische Darstellung einer beispielhaften Ausführungsform einer Anzeigevorrichtung 1 in einer Verstaustellung angezeigt. Die Anzeigevorrichtung 1 verfügt im gezeigten Beispiel über ein im Wesentlichen quaderförmiges Gehäuse 21, welches zum großen Teil von einer Gehäuseabdeckung 22 umgeben ist. Diese Gehäuseabdeckung 22 weist an einer Oberseite, also einer in positiver x-Richtung gelegenen Seite, einen sich im Wesentlichen in der z-y-Ebene erstreckenden Ausschnitt auf, welcher in der vorliegend gezeigten Verstaustellung durch ein erstes Abdeckelement 3 und ein zweites Abdeckelement 4 verschlossen ist. Zu sehen ist von den beiden Abdeckelementen 3, 4 hier nur ihre jeweilige Außenseite 24, 25. Eine optische Lichtumlenkung zu dem Fahrer 16 (Fig. 1) kann also in der Verstaustellung nicht erfüllt werden. Das erste Abdeckelement 3 muss für ein Überführen in eine Gebrauchsstellung, in der eine optische Funktion erfüllt werden kann, vorliegend linear in negativer y-Richtung unter die Gehäuseabdeckung 22 geschoben werden. Das zweite Abdeckelement 4 hingegen muss zum Erreichen einer Gebrauchsstellung um eine an einer in positiver y-Richtung gelegenen Seite des von den beiden Abdeckelementen 3, 4 geschlossenen Ausschnitts der Gehäuseabdeckung 22 angeordneten Rotationsachse R in die Gebrauchsstellung verschwenkt werden. Diese Rotationsachse R verläuft vorliegend parallel zur z-Achse. In einem eingebauten Zustand der Anzeigevorrichtung 1 wird in einem Kraftfahrzeug 15 nur die sich im Wesentlichen in der z-y-Ebene erstreckende Oberseite zu sehen sein. Über einen Anschluss 23 kann die Anzeigevorrichtung 1 dann mit elektrischer Energie versorgt werden und es können Datensignale und/oder Steuersignale ausgetauscht werden.

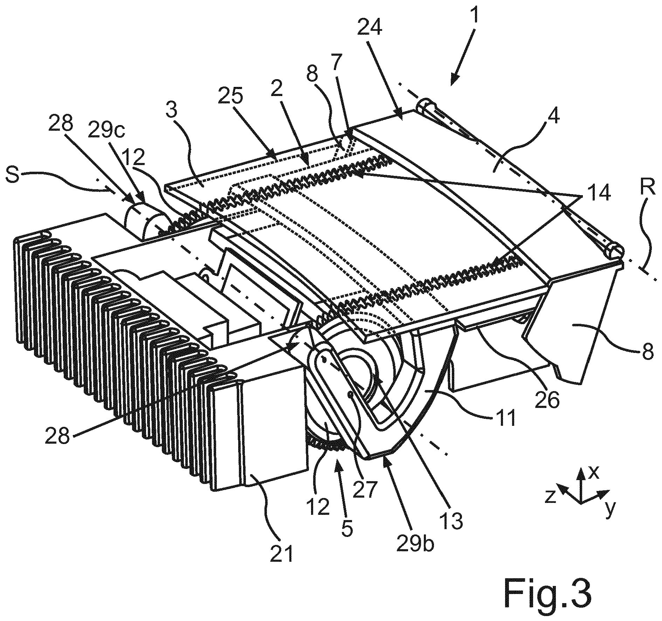

In Fig. 3 ist die in Fig. 2 dargestellte Anzeigevorrichtung 1 ohne Gehäuseabdeckung 22 (Fig. 2) dargestellt. Gut zu erkennen ist hier, dass das erste Abdeckelement 3 hier an einer der Außenseite 25 gegenüberliegenden Innenseite eine Zahnstruktur 14 aufweist, in welche vorliegend zwei Zahnräder 12 eines Antriebs 5 direkt kämmen. Da die Zahnstruktur 14 sich im gezeigten Beispiel geradlinig in x-Richtung erstreckt, hat ein Rotieren der Zahnräder 12 ein lineares Verschieben des ersten Abdeckelements 3 in x-Richtung zur Folge. Wie oben beschrieben wird in diesem Beispiel das erste Abdeckelement 3 unter die Gehäuseabdeckung 22 (Fig. 2) geschoben.

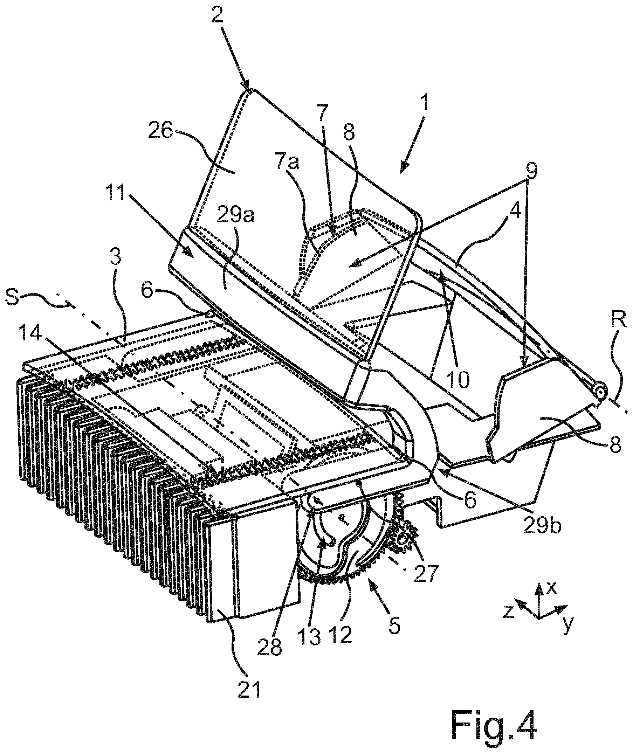

Ebenfalls mit dem Zahnrad 12 des Antriebs 5 mechanisch gekoppelt ist hier ein Trägerbügel 11, der im gezeigten Beispiel gemeinsam mit einer Spiegelfläche 26 den Spiegel 2 bildet. In der Verstaustellung erstreckt sich die Spiegelfläche 26 unterhalb der beiden Abdeckelemente 3, 4in der z-y-Ebene , also in negativer x-Richtung im Wesentlichen parallel zu den Abdeckelementen 3, 4. An der in negativer y-Richtung gelegenen, also vorliegend von der Rotationsachse R weg weisenden Kante der Spiegelfläche 26 ist der Trägerbügel 11 angebracht. Dieser verfügt über einen Mittelbereich 29a (Fig. 4) und über zwei Endbereiche 29b, 29c, die Trägerarme darstellen. An dem Mittelbereich 29a ist die Spiegelfläche 26 befestigt. Der Mittelbereich 29a geht an den in z-Richtung gegenüberliegenden Seiten des Trägerbügels 11 je in einen Endbereich 29b, 29c über. Die Endbereiche 29b, 29c sind hier jeweils symmetrisch. Die Endbereiche 29b, 29c weisen in diesem Beispiel eine U- oder V-ähnliche, gebogene Form auf, deren Biegung sich in der x-y-Ebene erstreckt, also vorliegend senkrecht zur Ebene der Spiegelfläche 26.

Die beiden U- bzw. V-förmigen Endbereiche 29b, 29c weisen hier in negativer y-Richtung gelegene freie Enden 28 auf. Diese Enden 28 sind je über eine Welle mit dem Gehäuse 21 verbunden. Durch die Welle kann der Spiegel 2 mit der Spiegelfläche 26 und dem Trägerbügel 11 um eine Schwenkachse S, welche durch die Welle verläuft, verschwenkt werden. Um das Verschwenken um die Schwenkachse S an eine Bewegung der Zahnräder 12 zu koppeln, verfügen die beiden U- bzw. V-förmigen Endbereiche 29b, 29c des Trägerbügels 11 hier über Stifte 27, welche in eine Führungskulisse 13 greifen, welche seitlich in die jeweiligen Zahnräder 12 eingelassen ist. Wird also bei einer Rotation der Zahnräder 12 über das Kämmen mit der Zahnstruktur 14 das erste Abdeckelement 3 vorliegend linear verschoben, so wird über die Führungskulisse 13, welche hier seitlich an den jeweiligen Zahnrädern 12 angebracht ist, durch die Stifte 27 in der gezeigten Ausführung eine Rotationskraft auf den Trägerbügel 11 und somit den Spiegel 2 ausgeübt. Somit wird bei einem Rotieren der Zahnräder 12 der Spiegel 2 um die Schwenkachse S aus der vorliegend gezeigten Verstaustellung in eine Gebrauchsstellung verschwenkt.

Das zweite Abdeckelement 4 verfügt vorliegend über die bereits in Fig. 2 gezeigten Merkmale hinaus über zwei Seitenwangen 8, welche im gezeigten Beispiel in einer x-y-Ebene senkrecht zur Rotationsachse R und im Wesentlichen senkrecht zur Außenseite 25 des zweiten Abdeckelements 4 angeordnet sind. Die Seitenwangen 8 verfügen hier an den jeweiligen innenliegenden Seitenflächen 9 (Fig. 4) über jeweils eine Führungskulisse 7. In eine Führungskulisse 7 greift ein Koppelelement 6 des ersten Abdeckelements 3 ein, welches vorliegend als Zapfen ausgeführt ist und erst in Fig. 4 deutlich als solches erkennbar ist. In der Verstaustellung schiebt sich das erste Abdeckelement 3 also im hier gezeigten Beispiel zwischen die Seitenwangen 8 des zweiten Abdeckelements 4 und greift dort in die Führungskulisse 7 ein.

In der Verstaustellung wird also das zweite Abdeckelement 4 gegen eine Federkraft eines Federelementes, welches eine Blattfeder oder eine Spiralfeder sein kann, durch die vorliegend als Zapfen ausgeführten Koppelelemente 6 des ersten Abdeckelements 3 in der Verstaustellung 6 gehalten. Wird nun der Antrieb 5 in Gang gesetzt, um die Anzeigevorrichtung 1 aus der Verstaustellung in die Gebrauchsstellung zu bewegen, so setzen sich die Zahnräder 12 in Bewegung. Da diese direkt über die Zahnstruktur 14 mit dem ersten Abdeckelement 3 kämmen, wird somit das erste Abdeckelement 3 in negativer y-Richtung verschoben. Die Führungskulisse 13 des Zahnrads 12 ist hier so ausgeführt, dass zunächst noch keine Kraft auf den Trägerbügel 11 des Spiegels 2 übertragen wird. Vielmehr gleitet der Stift 27 des Trägerbügels 11 ohne Kraftübertrag durch die Führungskulisse 13. Da sich das erste Abdeckelement 3 nun von dem zweiten Abdeckelement 4 in Richtung seiner Gebrauchsstellung entfernt und somit die hier als Zapfen ausgeführten Koppelelemente 6 das zweite Abdeckelement 4 nicht mehr entgegen der Federkraft des Federelementes in der Verstaustellung halten, wird sich das zweite Abdeckelement 4 ab einem gewissen Punkt der Verschiebebewegung selbsttätig durch die Federkraft in die Gebrauchsstellung bewegen. Über einen diesbezüglich zweiten Teilweg des ersten Abdeckelements 3, der sich zwischen der Verstaustellung und der Stelle der Verschiebebewegung, zu dem sich das zweite Abdeckelement 4 und das erste Abdeckelement 3 entkoppeln, bemisst, ist hier also über die Koppelelemente 6 und die Führungskulissen 7 noch eine mechanische Kopplung zwischen dem ersten Abdeckelement 3 und dem zweiten Abdeckelement 4 vorhanden. An der genannten Stelle der Verschiebebewegung haben sich dann die Zahnräder 12 soweit gedreht, dass sich die beiden Abdeckelemente 3, 4 entkoppeln. Ab dieser Stelle wird dann das zweite Abdeckelement 4 durch die Federkraft des Federelements automatisch auf einem dann anschließenden ersten Teilweg in die Gebrauchsstellung bewegt. Dort ist bevorzugt auch noch eine Vorspannung des zweiten Abdeckelements 4 durch das Federelement ausgebildet, so dass diese Gebrauchsstellung auch stabil gehalten ist und auch den Vibrationen in einem Betrieb des Kraftfahrzeugs 15 (Fig. 1) standhält.

An einem bestimmten Punkt der Rotation der Zahnräder 12, der vor, nach oder zeitgleich mit der Stelle der Entkopplung der Abdeckelemente 3, 4 der Verschiebebewegung eintreten kann, überträgt die Führungskulisse 13 eine Kraft auf den Stift 27 und somit den Trägerbügel 11 des Spiegels 2. Dann wird der Spiegel 2 in Bewegung versetzt. Haben der Spiegel 2 und die beiden Abdeckelemente 3, 4 die Gebrauchsstellung erreicht, so wird auch die Rotation der beiden Zahnräder 12 gestoppt.

In Fig. 4 ist die Anzeigevorrichtung 1 aus Fig. 3 in der Gebrauchsstellung dargestellt. Es ist gezeigt, dass das zweite Abdeckelement 4 ausgeklappt ist, also um die Rotationsachse R in die Gebrauchsstellung verschwenkt ist. Auch ist die trichterförmige Führungskulisse 7 an den innenliegenden Seitenflächen 9 der Seitenwangen 8 des zweiten Abdeckelementes 4 gezeigt. Auch die Innenseite 10 des zweiten Abdeckelements 4, welche vorliegend mit einer lichtabsorbierenden Beschichtung versehen ist, ist dargestellt. Das erste Abdeckelement 3 hat ebenfalls seine Gebrauchsstellung erreicht. Entsprechend ist es soweit in negativer y-Richtung verschoben, dass die Zahnräder 12 nunmehr das in positive y-Richtung gelegene Ende der in das erste Abdeckelement 3 integrierten Zahnstruktur 14 erreicht haben, also mit diesem Ende verkämmt sind. Auch der Spiegel 2 ist nun um die Schwenkachse S verschwenkt in seiner Gebrauchsstellung angeordnet. Der Spiegel 2 steht also aus dem geöffneten Gehäuse 21, in eingebautem Zustand aus dem in Fig. 2 gezeigten Ausschnitt hervor und kann eine optische Anzeigefunktion erfüllen. Gezeigt ist hier die Struktur der Führungskulisse 13 auf dem Zahnrad 12, welche den Stift 27 und somit den Spiegel 2 in der Gebrauchsstellung hält.

In der Gebrauchsstellung wird in der Anzeigevorrichtung 1 erzeugtes Licht an der Spiegelfläche 26 des Spiegels 2 reflektiert und mit Licht aus einer Umgebung überlagert, insbesondere mit Licht, welches in einem eingebauten Zustand der Anzeigvorrichtung 1 durch eine Windschutzscheibe 17 (Fig. 1) transmittiert wurde. Soll nun die Anzeigevorrichtung 1 aus der Gebrauchsstellung in eine Verstaustellung zurückgefahren werden, beispielsweise weil die Funktion der Anzeigevorrichtung 1 nicht benötigt wird, so wird in diesem Beispiel der elektromechanische Antrieb 5 die Zahnräder 12 in Drehung versetzen. Die Führungskulisse 13 der Zahnräder 12 ist beispielsweise so gestaltet, dass sich das erste Abdeckelement 3 und der Spiegel 2 gleichzeitig in Bewegung setzen. Da der Endbereich 29b, 29c des Trägerbügels 11 hier ausreichend Abstand zu dem ersten Abdeckelement 3 aufweist und überdies in diesem Beispiel in dem in der Gebrauchsstellung über das erste Abdeckelement 3 in positiver x-Richtung hervorstehenden Abschnitt des Endbereichs 29bn, 29c hier einen in x-Richtung zunehmenden Krümmungsradius aufweist, wird ein Kraftübertrag oder eine Kollision zwischen dem ersten Abdeckelement 3 und dem Spiegel 2 verhindert. Es wird also vorliegend gleichzeitig das erste Abdeckelement 3 in positiver x-Richtung gerade nach vorne geschoben und der Spiegel 2 durch ein Schwenken um die Schwenkachse S eingeklappt. In einer alternativen Ausführungsform könnte beispielsweise auch erst nach dem vollständigen Einklappen des Spiegels 2 in die Verstaustellung das Verschieben des ersten Abdeckelements 3 in die Verstaustellung erfolgen. Nachdem das erste Abdeckelement 3 dann ausgehend von der Gebrauchsposition einen ersten Teilweg zurück gelegt hat, wird es beispielsweise über die beiden Koppelelemente 6, welche als Zapfen ausgeführt sind, an das zweite Abdeckelement 4, genauer an die Seitenwangen 8 des zweiten Abdeckelements 4, stoßen. Dort beginnt mit der Kopplung der Abdeckelemente 3, 4 der zweite Teilweg des ersten Abdeckelements 3 auf seinem Weg in die Verstaustellung. Auf dem zweiten Teilweg liegt hier eine mechanische Kopplung zwischen erstem und zweitem Abdeckelement 3, 4 vor. Die vorliegend zapfenförmigen Koppelelemente 6 gleiten dann in die in diesem Beispiel trichterförmigen Führungskulissen 7 und bewirken so einen Kraftübertrag, welcher das zweite Abdeckelement 4 entgegen der Federkraft des Federelementes zurück in die Verstaustellung rotieren lässt. Die Trichterform ist so gestaltet, dass insbesondere aufgrund einer unteren Begrenzungswand 7a der Führungskulisse 7 bei linearer Bewegung des ersten Abdeckelements 3 das zweite Abdeckelement 4 rotatorisch nach unten verschwenkt wird. In der Verstaustellung wird dann auch durch die Koppelelemente 6 das zweite Abdeckelement 4 unter einer Vorspannung in der Verstaustellung gehalten.

## Patentansprüche

1. Anzeigevorrichtung (1) für ein Kraftfahrzeug, mit
- einem zwischen einer Verstaustellung und einer Gebrauchsstellung beweglich angeordneten Spiegel (2),
- einem ersten beweglich angeordneten Abdeckelement (3), welches zum Bewegen zwischen einer Verstaustellung und einer Gebrauchsstellung mit einem elektromechanischen Antrieb gekoppelt ist, und
- einem zweiten beweglich angeordneten Abdeckelement (4),
wobei die Anzeigevorrichtung (1) eine Verstaustellung aufweist, in der der Spiegel (2) und die beiden Abdeckelemente (3, 4) in einer jeweiligen zugehörigen Verstaustellung angeordnet sind, und eine Gebrauchsstellung, in der der Spiegel (2) und die beiden Abdeckelemente (3, 4) in einer jeweiligen zugehörigen Gebrauchsstellung angeordnet sind, und in der Verstaustellung die beiden Abdeckelemente (3, 4) den Spiegel (2) zumindest teilweise abdecken, wobei das zweite Abdeckelement (4) zumindest in der Verstaustellung durch ein Federelement vorgespannt ist, wobei das erste Abdeckelement (3) ausgehend von der Gebrauchsstellung auf einem ersten Teilweg des ersten Abdeckelements (3) von dem zweiten Abdeckelement (4) mechanisch entkoppelt ist und wobei das erste Abdeckelement (3) auf einem zweiten Teilweg des ersten Abdeckelements (3) bis zu einem Erreichen der Verstaustellung des ersten Abdeckelements (3) mit dem zweiten Abdeckelement (4) mechanisch gekoppelt ist,
**dadurch gekennzeichnet, dass** das erste Abdeckelement (3) zumindest ein, insbesondere zapfenförmiges, Koppelelement (6) aufweist, welches auf dem zweiten Teilweg in eine Führungskulisse (7) des zweiten Abdeckelements (4) eingreift und so die mechanische Kopplung umgesetzt ist.

2. Anzeigevorrichtung (1) nach einem der vorhergehenden Ansprüche,
**dadurch gekennzeichnet, dass**
in der Verstaustellung des zweiten Abdeckelements (4) das zweite Abdeckelement (4) mit dem ersten Abdeckelement (3) mechanisch gekoppelt ist und durch das erste Abdeckelement (3), insbesondere in der Verstaustellung des ersten Abdeckelements (3), gehalten ist.

3. Anzeigevorrichtung (1) nach einem der vorhergehenden Ansprüche,
**dadurch gekennzeichnet, dass**
die mechanische Kopplung derart ausgebildet ist, dass durch ein, insbesondere lineares, Verschieben des ersten Abdeckelements (3) das zweite Abdeckelement (4) mitbewegt ist.

4. Anzeigevorrichtung (1) nach einem der vorhergehenden Ansprüche,
**dadurch gekennzeichnet, dass**
das zweite Abdeckelement (4) eine Rotationsachse (R) aufweist und jeweils durch eine Rotation um diese Rotationsachse (R) in die zugehörige Verstau- und Gebrauchsstellung schwenkbar ist.

5. Anzeigevorrichtung (1) nach einem der vorhergehenden Ansprüche,
**dadurch gekennzeichnet, dass**
das zweite Abdeckelement (4) U-förmig mit zwei Seitenwangen (8) ausgeführt ist und eine, insbesondere trichterförmige, Führungskulisse (7) an einer, insbesondere innenliegenden, Seitenfläche (9) zumindest einer Seitenwange (8) angeordnet ist.

6. Anzeigevorrichtung (1) nach einem der vorhergehenden Ansprüche,
**dadurch gekennzeichnet, dass**
das erste und/oder das zweite Abdeckelement (3, 4) an einer in der Verstaustellung und/oder der Gebrauchsstellung dem Spiegel (2) zugewandten Innenseite (10) eine lichtabsorbierende Oberfläche aufweist.

7. Anzeigevorrichtung (1) nach einem der vorhergehenden Ansprüche,
**dadurch gekennzeichnet, dass**
der Spiegel (2) mit dem Antrieb (5) des ersten Abdeckelements (3) mechanisch gekoppelt und durch diesen verschwenkbar ist.

8. Anzeigevorrichtung (1) nach Anspruch 7,
**dadurch gekennzeichnet, dass**
der Spiegel (2) einen Trägerbügel (11) aufweist, der zumindest mit einer, insbesondere seitlich, mit einem Zahnrad (12) einer Mechanik des Antriebs (5) integrierten Führungskulisse (13) mechanisch gekoppelt ist.

9. Anzeigevorrichtung (1) nach einem der vorhergehenden Ansprüche,
**dadurch gekennzeichnet, dass**
das erste Abdeckelement (3) eine integrierte, insbesondere geradlinige, Zahnstruktur (14) aufweist, welche ein Zahnrad (12) des Antriebs (5) kämmt, insbesondere direkt kämmt.

10. Anzeigevorrichtung (1) nach einem der vorhergehenden Ansprüche, welche als Kopf-oben-Anzeige ausgeführt ist.

11. Kraftfahrzeug mit einer Anzeigevorrichtung (1) nach einem der Ansprüche 1 bis 10.

12. Verfahren zum Betreiben einer Anzeigevorrichtung (1) für ein Kraftfahrzeug, bei dem
- ein zwischen einer Verstaustellung und einer Gebrauchsstellung beweglich angeordneter Spiegel (2),
- ein erstes beweglich angeordnetes Abdeckelement (3), welches zum Bewegen zwischen einer Verstaustellung und einer Gebrauchsstellung mit einem elektromechanischen Antrieb (5) gekoppelt ist, und
- ein zweites beweglich angeordnetes Abdeckelement (4),
zwischen einer Verstaustellung der Anzeigevorrichtung (1), in der der Spiegel (2) und die beiden Abdeckelemente (3, 4) in einer jeweiligen zugehörigen Verstaustellung angeordnet sind, und einer Gebrauchsstellung der Anzeigevorrichtung (1), in der der Spiegel (2) und die beiden Abdeckelemente (3, 4) in einer jeweiligen zugehörigen Gebrauchsstellung angeordnet sind, bewegt werden, und in der Verstaustellung die beiden Abdeckelemente (3, 4) den Spiegel (2) zumindest teilweise abdecken, wobei das zweite Abdeckelement (4) zumindest in der Verstaustellung durch ein Federelement vorgespannt wird, wobei das erste Abdeckelement (3) ausgehend von der Gebrauchsstellung auf einem ersten Teilweg des ersten Abdeckelements (3) von dem zweiten Abdeckelement (4) mechanisch entkoppelt wird und wobei das erste Abdeckelement (3) auf einem zweiten Teilweg des ersten Abdeckelements (3) bis zu einem Erreichen der Verstaustellung des ersten Abdeckelements (3) mit dem zweiten Abdeckelement (4) mechanisch gekoppelt wird,
**dadurch gekennzeichnet, dass** das erste Abdeckelement (3) mit zumindest einem, insbesondere zapfenförmigen, Koppelelement (6) auf dem zweiten Teilweg in eine Führungskulisse des zweiten Abdeckelements (4) eingreift und so die mechanische Kopplung umsetzt.

## Claims

1. Display device (1) for a motor vehicle, having
- a mirror (2) which is arranged so as to be movable between a stowage position and a usage position,
- a first movably arranged covering element (3) which, for the movement between a stowage position and a usage position, is coupled to an electromechanical drive, and
- a second movably arranged covering element (4), wherein the display device (1) has a stowage position, in which the mirror (2) and the two covering elements (3, 4) are arranged in a respective associated stowage position, and a usage position, in which the mirror (2) and the two covering elements (3, 4) are arranged in a respective associated usage position, and in the stowage position, the two covering elements (3, 4) at least partially cover the mirror (2)
wherein
the second covering element (4) is, at least in the stowage position, preloaded by a spring element, wherein over a first travel path segment of the first covering element (3) proceeding from the usage position, the first covering element (3) is mechanically decoupled from the second covering element (4) and wherein, over a second travel path segment of the first covering element (3) as far as a point at which the stowage position of the first covering element (3) is reached, the first covering element (3) is mechanically coupled to the second covering element (4),
**characterized in that** the first covering element (3) has at least one, in particular peg-like coupling element (6) which, over the second travel path segment, engages into a guide slot (7) of the second covering element (4), with the mechanical coupling being implemented in this way.

2. Display device (1) according to one of the preceding claims,
**characterized in that**,
in the stowage position of the second covering element (4), the second covering element (4) is mechanically coupled to the first covering element (3) and is held by the first covering element (3), in particular in the stowage position of the first covering element (3).

3. Display device (1) according to one of the preceding claims,
**characterized in that**
the mechanical coupling is designed such that, by way of an in particular linear displacement of the first covering element (3), the second covering element (4) is moved conjointly.

4. Display device (1) according to one of the preceding claims,
**characterized in that**
the second covering element (4) has an axis of rotation (R) and is pivotable into the associated stowage position and usage position in each case by way of a rotation about said axis of rotation (R).

5. Display device (1) according to one of the preceding claims,
**characterized in that**
the second covering element (4) is of U-shaped form with two side webs (8), and an in particular funnel-shaped guide slot (7) is arranged on an in particular inner side surface (9) of at least one side web (8).

6. Display device (1) according to one of the preceding claims,
**characterized in that**
the first and/or the second covering element (3, 4) has a light-absorbing surface on an inner side (10) which, in the stowage position and/or in the usage position, faces toward the mirror (2).

7. Display device (1) according to one of the preceding claims,
**characterized in that**
the mirror (2) is mechanically coupled to the drive (5) of the first covering element (3) and can be pivoted by said drive.

8. Display device (1) according to Claim 7,
**characterized in that**
the mirror (2) has a carrier bracket (11) which is mechanically coupled at least to a guide slot (13) which is in particular laterally integrated with a toothed wheel (12) of a mechanism of the drive (5).

9. Display device (1) according to one of the preceding claims, **characterized in that** the first covering element (3) has an integrated, in particular rectilinear, toothed structure (14) which meshes, in particular directly meshes, with a toothed wheel (12) of the drive (5).

10. Display device (1) according to one of the preceding claims, which is in the form of a head-up display.

11. Motor vehicle having a display device (1) according to one of Claims 1 to 10.

12. Method for operating a display device (1) for a motor vehicle, in which method
- a mirror (2) which is arranged so as to be movable between a stowage position and a usage position,
- a first movably arranged covering element (3) which, for the movement between a stowage position and a usage position, is coupled to an electromechanical drive (5), and
- a second movably arranged covering element (4), are moved between a stowage position of the display device (1), in which the mirror (2) and the two covering elements (3, 4) are arranged in a respective associated stowage position, and a usage position of the display device (1), in which the mirror (2) and the two covering elements (3, 4) are arranged in a respective associated usage position, and in the stowage position, the two covering elements (3, 4) at least partially cover the mirror (2),
wherein
the second covering element (4) is, at least in the stowage position, preloaded by a spring element, wherein, over a first travel path segment of the first covering element (3) proceeding from the usage position, the first covering element (3) is mechanically decoupled from the second covering element (4) and wherein, over a second travel path segment of the first covering element (3) as far as a point at which the stowage position of the first covering element (3) is reached, the first covering element (3) is mechanically coupled to the second covering element (4), **characterized in that** the first covering element (3) engages with at least one, in particular peg-like coupling element (6), over the second travel path segment, into a guide slot of the second covering element (4) and implements the mechanical coupling in this way.

## Revendications

1. Dispositif d'affichage (1) destiné à un véhicule automobile, comprenant
- un miroir (2) disposé de manière mobile entre une position de rangement et une position d'utilisation,
- un premier élément de recouvrement (3) disposé de manière mobile, lequel est accouplé à un entraînement électromécanique pour le déplacement entre une position de rangement et une position d'utilisation, et
- un deuxième élément de recouvrement (4) disposé de manière mobile,
le dispositif d'affichage (1) présentant une position de rangement, dans laquelle le miroir (2) et les deux éléments de recouvrement (3, 4) sont disposés dans une position de rangement associée respective, et une position d'utilisation, dans laquelle le miroir (2) et les deux éléments de recouvrement (3, 4) sont disposés dans une position d'utilisation associée respective et, dans la position de rangement, les deux éléments de recouvrement (3, 4) recouvrant au moins partiellement le miroir (2), le deuxième élément de recouvrement (4) étant, au moins dans la position de rangement, précontraint par un élément ressort, le premier élément de recouvrement (3) étant désaccouplé mécaniquement du deuxième élément de recouvrement (4) sur un premier trajet partiel du premier élément de recouvrement (3) à partir de la position d'utilisation, et le premier élément de recouvrement (3) étant accouplé mécaniquement au deuxième élément de recouvrement (4) sur un deuxième trajet partiel du premier élément de recouvrement (3) jusqu'à ce que la position de rangement du premier élément de recouvrement (3) soit atteinte,
**caractérisé en ce que** le premier élément de recouvrement (3) comprend au moins un élément d'accouplement (6) en particulier en forme de goupille, lequel vient en prise dans une coulisse de guidage (7) du deuxième élément de recouvrement (4) sur le deuxième trajet partiel, et l'accouplement mécanique est ainsi réalisé.

2. Dispositif d'affichage (1) selon l'une des revendications précédentes,
**caractérisé en ce que**,
dans la position de rangement du deuxième élément de recouvrement (4), le deuxième élément de recouvrement (4) est accouplé mécaniquement au premier élément de recouvrement (3) et est retenu par le premier élément de recouvrement (3), en particulier dans la position de rangement du premier élément de recouvrement (3).

3. Dispositif d'affichage (1) selon l'une des revendications précédentes,
**caractérisé en ce que**
l'accouplement mécanique est réalisé de telle sorte que, par un déplacement en particulier linéaire du premier élément de recouvrement (3), le deuxième élément de recouvrement (4) est déplacé conjointement.

4. Dispositif d'affichage (1) selon l'une des revendications précédentes,
**caractérisé en ce que**
le deuxième élément de recouvrement (4) présente un axe de rotation (R) et peut être pivoté dans la position de rangement et d'utilisation associée respectivement par une rotation autour de cet axe de rotation (R).

5. Dispositif d'affichage (1) selon l'une des revendications précédentes,
**caractérisé en ce que**
le deuxième élément de recouvrement (4) est réalisé en forme de U avec deux joues latérales (8), et une coulisse de guidage (7) en particulier en forme d'entonnoir est disposée sur une face latérale (9), en particulier située à l'intérieur, d'au moins une joue latérale (8).

6. Dispositif d'affichage (1) selon l'une des revendications précédentes,
**caractérisé en ce que**
le premier et/ou le deuxième élément de recouvrement (3, 4) comprend/comprennent une surface absorbant la lumière sur un côté intérieur (10) tourné vers le miroir (2) dans la position de rangement et/ou la position d'utilisation.

7. Dispositif d'affichage (1) selon l'une des revendications précédentes,
**caractérisé en ce que**
le miroir (2) est accouplé mécaniquement à l'entraînement (5) du premier élément de recouvrement (3) et peut être pivoté par cet entraînement.

8. Dispositif d'affichage (1) selon la revendication 7,
**caractérisé en ce que**
le miroir (2) comprend un étrier de support (11) qui est accouplé mécaniquement au moins avec une coulisse de guidage (13) intégrée en particulier latéralement à une roue dentée (12) d'un mécanisme de l'entraînement (5).

9. Dispositif d'affichage (1) selon l'une des revendications précédentes, **caractérisé en ce que**
le premier élément de recouvrement (3) comprend une structure dentée (14) intégrée en particulier rectiligne, laquelle s'engrène en particulier directement avec une roue dentée (12) de l'entraînement (5).

10. Dispositif d'affichage (1) selon l'une des revendications précédentes, lequel est réalisé sous forme d'affichage tête haute.

11. Véhicule automobile comprenant un dispositif d'affichage (1) selon l'une des revendications 1 à 10.

12. Procédé permettant de faire fonctionner un dispositif d'affichage (1) pour un véhicule automobile, procédé selon lequel
- un miroir (2) disposé de manière mobile entre une position de rangement et une position d'utilisation,
- un premier élément de recouvrement (3) disposé de manière mobile, lequel est accouplé à un entraînement électromécanique (5) pour le déplacement entre une position de rangement et une position d'utilisation, et
- un deuxième élément de recouvrement (4) disposé de manière mobile
sont déplacés entre une position de rangement du dispositif d'affichage (1), dans laquelle le miroir (2) et les deux éléments de recouvrement (3, 4) sont disposés dans une position de rangement associée respective, et une position d'utilisation du dispositif d'affichage (1), dans laquelle le miroir (2) et les deux éléments de recouvrement (3, 4) sont disposés dans une position d'utilisation associée respective et, dans la position de rangement, les deux éléments de recouvrement (3, 4) recouvrent au moins partiellement le miroir (2), le deuxième élément de recouvrement (4) étant, au moins dans la position de rangement, précontraint par un élément ressort, le premier élément de recouvrement (3) étant désaccouplé mécaniquement du deuxième élément de recouvrement (4) sur un premier trajet partiel du premier élément de recouvrement (3) à partir de la position d'utilisation, et le premier élément de recouvrement (3) étant accouplé mécaniquement au deuxième élément de recouvrement (4) sur un deuxième trajet partiel du premier élément de recouvrement (3) jusqu'à ce que la position de rangement du premier élément de recouvrement (3) soit atteinte,
**caractérisé en ce que** le premier élément de recouvrement (3) vient en prise, par au moins un élément d'accouplement (6) en particulier en forme de goupille, dans une coulisse de guidage du deuxième élément de recouvrement (4) sur le deuxième trajet partiel, et réalise ainsi l'accouplement mécanique.
